# EUROPÄISCHE PATENTSCHRIFT

(11) **EP 0 721 649 B1**
(45) Veröffentlichungstag und Bekanntmachung des Hinweises auf die Patenterteilung: **10.12.1997**
(21) Anmeldenummer: 94926086.3
(22) Anmeldetag: 06.09.1994
(51) Int. Cl.: H01H 13/60

(54) **TAST-RASTSCHALTER**
LOCKING KEY SWITCH
COMMUTATEUR A TOUCHE ENCLIQUETABLE

(30) Priorität: 09.09.1993 DE 4330578; 07.04.1994 DE 4411927; 10.08.1994 DE 4428230
(43) Veröffentlichungstag der Anmeldung: 17.07.1996
(73) Patentinhaber: EATON CONTROLS GmbH & Co. KG, 55445 Langenlonsheim (DE)
(72) Erfinder: LENG, Peter, D-65428 Rüsselsheim (DE)
(74) Vertreter: Becker, Bernd, Dipl.-Ing.
(86) Internationale Anmeldenummer: DE9401033
(87) Internationale Veröffentlichungsnummer: WO9507541

(56) Entgegenhaltungen:
- EP-A- 0 301 413
- FR-A- 2 565 730
- US-A- 4 352 967

## Beschreibung

Die Erfindung bezieht sich auf einen Tast-Rastschalter, insbesondere für die Innenleseleuchte eines Kraftfahrzeuges, mit
- einem Gehäuse und einer zugehörigen Grundplatte,
- einer federbelasteten, gegenüber dem Gehäuse bewegbaren Drucktaste,
- einem durch die Drucktaste bewegbaren Schaltstößel und
- einer durch den Schaltstößel schwenkbaren Schaltwippe mit einer eingesetzten, auf der Grundplatte Anschlußkontakte beaufschlagenden federbelasteten Kontaktbrücke:

Aus der DE-A- 37 24 736 ist ein derartiger elektrischer Schalter, insbesondere für Kraftfahrzeuge, mit einem Gehäuse, zu dem eine Grundplatte gehört, und mit einer Drucktaste, die gegenüber dem Gehäuse vorzugsweise linear bewegbar ist, bekannt. Dieser Schalter besitzt weiterhin einen Schaltstößel, der mit der Drucktaste verschiebbar und gegenüber der Drucktaste verschwenkbar ist, und ferner eine Schaltwippe, die in der Grundplatte drehbar gelagert ist. Die Schaltwippe wird über die Drucktaste und den Schaltstößel wechselweise zwischen zwei Endlagen hin- und hergeschwenkt und steuert dabei eine bewegliche Kontaktbrücke, insbesondere eine Schnappfeder, wobei der Schaltstößel in der Grundplatte gelagert ist. Durch das direkte lineare Aufeindanderbauen von Grundplatte, Gehäuse und Drucktaste mit deren darin befindlicher Schaltwippe und dem Schaltstößel baut der bekannte Schalter sehr groß. Der für das Umschalten der Schwaltwippe erforderliche Schalthub muß auch an der Drucktaste durchgeführt werden können.

Der Erfindung liegt daher die Aufgabe zugrunde, einen Tast-Rastschalter der eingangs genannten Art zu schaffen, bei dem ein extrem kurzer Betätigungshub bei gleichzeitig gegebener kleiner Bauform erreicht wird.

Diese Aufgabe wird erfindungsgemäß dadurch gelöst, daß
- die Drucktaste drehbeweglich am Gehäuse, der Schaltstößel drehbeweglich an der Drucktaste und die Schaltwippe drehbeweglich am Gehäuse gelagert ist,
- die Betätigungsfläche der Drucktaste rechtwinklig zur Längsachse des Gehäuses ausgerichtet ist,
- das Lager zwischen der Drucktaste und dem Gehäuse am entgegengesetzten Ende der Einleitung der Betätigungskraft auf die Betätigungsfläche der Drucktaste vorgesehen ist, und
- auf der der Betätigungsfläche gegenüberliegenden Unterseite der Drucktaste zwei senkrecht zu der Betätigungsfläche verlaufende Schwenkhebel angeformt sind, in die das Lager zwischen der Drucktaste und dem Schaltstößel integriert ist.

Durch diese Maßnahmen erhalten die Drucktaste, das Gehäuse, der Schaltstößel und die Schaltwippe genau zueinander festgelegte Drehpunkte, wodurch relativ große Toleranzen und Gleitführungen wegfallen. Darüber hinaus ergibt sich ein sehr kurzer Betätigungshub und eine kleine Bauweise des Tast-Rastschalters.

Um ein gleiches Schaltkraftniveau und ein gleiches Schaltegefühl beim Ein- und Ausschalten zu erzielen, ist in Weiterbildung der Erfindung das Lager zwischen Gehäuse und Schaltwippe auf der Längsachse des Gehäuses angeordnet.

Außerdem ist bevorzugt vorgesehen, daß das Zusammenfügen des Lagers zwischen Gehäuse und Drucktaste, des Lages zwischen Drucktaste und Schaltstößel und des Lagers zwischen Gehäuse und Schaltwippe jeweils durch eine Klipsverbindung erreicht wird. Somit sind alle Teile des Tast-Rast-Schalters von der Bedienseite bereits als Baugruppe aufgebaut, wodurch ein einfaches und kostengünstiges Weiterverwenden zu einem Komplett-Tast-Rast-Schalter ermöglicht wird.

Bevorzugt ist ferner, daß mindestens einer der an der Drucktaste befindlichen Schwenkhebel ein Federlager besitzt, daß am Gehäuse ein Federgegenlager angeformt ist, und daß zwischen dem Federlager am Schwenkhebel und dem Federgegenlager am Gehäuse ein Federelement eingespannt ist. In Weiterbildung der bevorzugten Ausgestaltung ist an mindestens einem, an der Drucktaste befindlichen Schwenkhebel ein Anschlagzapfen angeformt, der mit am Gehäuse angeordneten oberen Anschlagnocken und unteren Anschlagnocken den Betätigungshub der Drucktaste begrenzt. Hierdurch wird zum einen das sichere Betätigen der Drucktaste mit dem Anschlagen am unteren Anschlagnocken unter Wirkung der Betätigungskraft an der Drucktaste und zum anderen nach Loslassen der Betätigungskraft unter Wirkung der Druckfeder der Rückstellweg durch den oberen Anschlagnocken begrenzt.

Eine weitere vorteilhafte Ausgestaltung ergibt sich dadurch, daß der Schaltstößel an seinen Enden die Lager zwischen Schaltstößel und Drucktaste aufweist, daß am Schaltstößel ein Umschaltfinger, der an seinem Ende eine V-Form besitzt, und eine Umschaltkulisse, in welcher eine V-förmige Ausnehmung eingelassen ist, angeformt sind, wobei Umschaltfinger und Umschaltkulisse gleichsinnig symmetrisch ausgerichtet sind, und die offenen V-Seiten von Umschaltfinger und Umschaltkulissen einander gegenüberstehen.

Bevorzugt ist weiterhin, daß die Schaltwippe an ihren Enden die Lager zwischen Schaltstößel und Gehäuse und jeweils symmetrisch in Richtung der Grundplatte eine Kontaktbrücke und einen Raststein und in Richtung des Schaltstößels eine Umschaltfeder und eine Umschaltfläche aufweist. In vorteilhafter Weiterbildung der Erfindung ist das Gehäuse aus einem rechteckigen Rahmen gebildet, an dessen Schmalseiten Ansätze mit Lagerzapfen für das Lager mit der Drucktaste angeformt sind, und der Rahmen ist nach der Grundplatte hin teilweise durch einen, eine Rastkulisse aufweisenden Boden verschlossen, wobei durch die verbleibende Kontaktöffnung die Kontaktbrücke hindurchragt und an der Unterseite des Rahmens des Gehäuses Positionierzapfen sowie Klipsfedern angeformt sind.

Bei einer vorteilhaften Weiterbildung des Erfindungsgegenstandes ist im Boden des rechteckigen Rahmens des Gehäuses eine Rastkulisse eingelassen, durch die eine stabile Schaltposition mittels einer Yertiefung und eine weitere stabile Schaltposition mittels einer weiteren Vertiefung erreichbar ist, wobei zwischen den Vertiefungen die Umschaltkuppe angeordnet ist. Durch diese Maßnahmen lassen sich neben der kompakten Bauweise auch eine stabile Lagerung der Bauteile zueinander, ein gewünschtes Schaltgeführ sowie ein bistabiles Verhalten des Schaltgliedes bzw. des Tast-Rast-Schalters erreichen.

Nach einer alternativen Ausgestaltung der Erfindung ist im Boden des rechteckigen Rahmen des Gehäuses eine Tastkulisse eingelassen, durch die eine Tast-Schaltposition mittels der Anschrägung erreichbar ist, wobei die Tast-Schaltposition nach Loslassen der Drucktaste selbsttätig unter Wirung des federbelasteten Raststeines in die Ausgangs-Schaltposition. rückstellt. Lediglich durch eine Umgestaltung des Bodens des Rahmens des Gehäuses ist somit ein anderes Schaltverhalten des Tast-Rast-Schalters erreichbar. Aus dem bistabilen Schaltverhalten ist ein monostabiles Schaltverhalten geworden.

Um ein sicheres Zusammenwirken der Einzelteile des Tast-Rast-Schalters bzw. der Einzelheiten der Einzelteile des Tast-Rast-Schalters zu erreichen, wirkt der Umschaltfinger des Schaltstößels mit der Umschaltfläche der Schaltwippe zusammen, um die Schaltpositionen umzuschalten, und die Umschaltfeder der Schaltwippe taucht in die Umschaltkulisse des Schaltstößels ein und durchdringt die Öffnung, um den Schaltstößel nach Loslassen der Drucktaste für die nächste Betätigung zu aktivieren, und der in einer Bohrung federbelastet geführte Raststein der Schaltwippe legt in der Rastkulisse oder Tastkulisse des Bodens des Gehäuses die unterschiedlichen Schaltpositionen fest, und an der Schaltwippe ist eine federbelastete Kontaktbrücke unverlierbar zwischen Führungslaschen gehaltert.

In bevorzugter Ausgestaltung des Tast-Rast-Schalters weist die Grundplatte Bohrungen für die Positionierzapfen des Gehäuses und Klipsausnehmungen für die Klipsfedern des Gehäuses auf, und Gehäuse und Grundplatte sind mittels Klipsverbindungen verbunden. Hierdurch wird erreicht, daß über die Positionierzapfen am Gehäuse, welche mit den Bohrungen in der Grundplatte zusammenwirken, die Lage des Gehäuses zur Grundplatte festgelegt wird und mittels der Klipsverbindung eine schnelle, sichere und kostengünstige Verbindungsart vorliegt. In vorteilhafter Weiterbildung der Erfindung ist die Grundplatte ein umspritztes Stanzgitter. Hierdurch kann zum einen ein hoher Stromfluß und zum anderen eine Anpaßbarkeit an die Schaltverhältnisse erreicht werden. Bei einer alternativen Ausführung ist die Grundplatte eine Leiterplatte mit darauf befindlichen Leiterbahnen. so ergibt sich eine leichtere Anpaßbarkeit an die gewünschten Strompfade.

Bevorzugt ist ferner vorgesehen, daß mehreren Tast-Rast-schaltern eine Grundplatte zugeordnet ist. Zweckmäßigerweise ist an der Grundplatte ein Anschlußstecker für den elektrischen Anschluß der Tast-Rastschalter vorgesehen. Durch diese Anordnung ergibt sich, daß mehrere Tast-Rast-Schalter an eine Grundplatte montiert werden können, wobei die Strompfade zu einem Anschlußstecker zusammengeführt werden können.

Gemäß einer weiteren vorteilhaften Ausgestaltung der Erfindung sind an der Grundplatte Kontakthaltewinkel für das Einsetzen von Glühlampen und Vorrichtungen für das Befestigen von.Reflektoren einstückig angebracht. Somit ergibt sich der Vorteil, daß direkt aus dem Stanzgitter bzw. von der Leiterbahn die Kontakthaltewinkel als Strom fortführende Elemente angebunden sind und die Vorrichtungen für das Befestigen von Reflektoren bereits ortsgenau angebunden sind.

Bevorzugt ist weiterhin, daß die Grundplatte in Führungen eines Innenleselichts-Gehäuses eingesetzt ist, daß die Grundplatte Klipsnasen aufweist, die mit entsprechenden Absätzen am Innenleselicht-Gehäuse zusammenwirken, daß ein Steg an der Grundplatte angeformt ist, der in einer Bohrung im Innenleselicht-Gehäuse eingreift, daß an der Grundplatte Bolzen angeformt sind, die in Löchern eine Blende eintauchen, daß am Innenleselicht-Gehäuse Klipsfedern angespritzt sind, die mit Laschen an der Blende zusammenwirken, daß in der Blende Ausnehmungen für die Drucktasten vorhanden sind, und daß in die Blende durchscheinende Bereiche eingelassen sind. Hierdurch wird erreicht, daß die Grundplatte mit den Tast-Rastschaltern in ihrer variablen Ausgestaltung direkt in ein Innenleselicht-Gehäuse eingesetzt werden kann, wobei Führungs- und Befestigungsmittel dies erleichtern und durch das Einsetzen in das Innenleselicht-Gehäuse mit zugehöriger Blende die Tast-Rastschalter-Baugruppe, welche eine unterschiedliche variable Ausgestaltung aufweisen kann, einen weiteren mechanischen Schutz genießt.

Um einen optisch besseren Gesamteindruck der die Tast-Rastschalter aufweisenden Innenleseleuchte zu erhalten, wobei auch der funktionelle Zusammenhang zwischen einem Tast-Rastschalter und zugehörigem Lichtfenster klar ersichtlich ist, ist bevorzugt auch vorgesehen, daß die durchscheinenden Bereiche der Blende aus einem Lichtfenster und mindestens einem Punktstrahler bestehen. Um eine bessere Bündelung des die durchscheinenden Bereiche durchströmenden Lichtes zu erhalten, ist zweckmäßigerweise mindestens ein durchscheinender Bereich der Blende auf der der Glühlampe zugewandten Seite mit Prismen versehen. Nach bevorzugter Weiterbildung der Erfindung bildet eine nach außen, der Glühlampe abgewandte Lichtaustrittsfläche einen symmetrisch zu einer Achse ausgerichteten konvexen Kugelabschnitt, und eine der Glühlampe zugewandte Lichteintrittsfläche ist schräg zur Achse geneigt. Durch diese Maßnahme ergibt sich die gerichtete Ausleuchtung eines bestimmtes Bereiches, da sich durch die schräg eingestellte Lichteintrittsfläche mit den darin ausgerichteten Prismen ein bestimmter Lichtkegel einstellt. Um Streulicht zu vermeiden und einen kontrastreichen Hell-Dunkel-Übergang zu erhalten und auch die Kegelform des Lichtstrahlers besser auszubilden ist weiterhin bevorzugt vorgesehen, daß die Lichteintrittsfläche teilweise durch eine aus lichtundurchläassigem Maerial bestehende Lasche abgedeckt ist, wobei eine frei, der Achse zugewandte Kante der Lasche einen Radius bildet, dessen Übergangskanten zur Blende annähernd im Bereich einer Symmetrielinie des Punkstrahlers liegen, und die Bogenhöhe des Radiusses der Lasche annähernd die Hälfte des Radiusses des Punkstrahlers beträgt.

Um eine größere Lichtausbeute im Bereich der Punkstrahler zu erhalten, ist zweckmäßigerweise die Oberfläche des umlaufenden Bereiches zwischen dem kleinen Durchmesser und dem großen Durchmesser der Punkstrahler mit einer lichtreflektierenden Schicht versehen. Um eine saubere Abgrenzung der lichtreflektierenden Schicht zu erreichen und um die Blende trotzdem im gleichen Verfahren herstellen zu können, ohne daß aufwendige Nacharbeiten erforderlich sind, ist nach einer weiteren vorteilhaften Ausgestaltung der Erfindung die Oberfläche mit der lichtreflektierenden Schicht Teil eines als Einzelteil ausgebildeten Ringreflektors. In einem Zweifarben-Spritzverfahren wird zunächst das als Träger dienende lichtundurchlässige Teil mit Aufnahme für den Ringreflektor gespritzt.Dann wird der Träger mit dem Ringreflektor bestückt, und als Schlußarbeitsgang erfolgt das Umspritzen mit dem durchscheinenden Werkstoff für die Lichtfenster und die Punkstrahler. Letztendlich liegt nach dem Zweifarben-Spritzverfahren wieder nur ein Einzelteil vor. Sonach liegt weder ein Teil, das nur aus dem lichtundurchlässigen Material oder dem durchscheinenden Werkstoff besteht, vor, wodurch das Handling am Montageplatz wesentlich erleichtert wird. Die Herstellung des Ringreflektors ist aus verschiedenen Materialien möglich. Es hat sich jedoch herausgestellt, daß bei zwei nebeneinanderliegenden, festverbundenen Teilen es von Vorteil ist, wenn beide Teile aus dem gleichen Werkstoff bestehen. Daher ist zweckmäßigerweise der Ringreflektor ein Kunststoff-Spritzteil, dessen von der Blende her sichtbaren Oberflächen hochglanzpoliert oder verchromt sind. Hierdurch ergibt sich ein leichtes Händeln der aus Kunststoff bestehenden Ringreflektoren, da sie relativ leicht sind und sich nicht gegenseitig beschädigen können. Darüber hinaus wird das Recyceln der Blende aufgrund des einheitlichen Kunststoffteils erleichert

Um die Arbeitsabläufe zu automatisieren, müssen die Ringreflektoren, deren Oberfläche der Oberfläche der Blende angepaßt ist und deren Lichtaustrittskegel zum Punktstrahler ausgerichtet sind, auch von Automaten händelbar sein. Bevorzugt trägt daher der Ringreflektor auf seiner der Blende abgewandten Seite Aufnahmezapfen, mittels derer er sortiert, ausgerichtet und der für ihn bestimmen Aufnahme zugeführt wird, um dort mit seinen Aufnahmezapfen in am Träger eingelassene Aufnahmebohrungen eingesteckt zu werden. Die lichtreflektierende Schicht der Ringreflektoren soll nicht mehr von flüssigem Kunststoff bedeckt werden. Daher werden nach bevorzugter Weiterbildung die Punkstrahler über an Zapfen angeschlossene Angußkanäle gespritzt, wobei der durchscheinende Werkstoff nicht über die Oberfläche des Ringreflektors fließt.

Der der Erfindung zugrundeliegende Gedanke wird in der nachfolgenden Beschreibung anhand mehrerer Ausführungsbeispiele, die in der Zeichnung dargestellt sind, näher erläutert. Es zeigt:

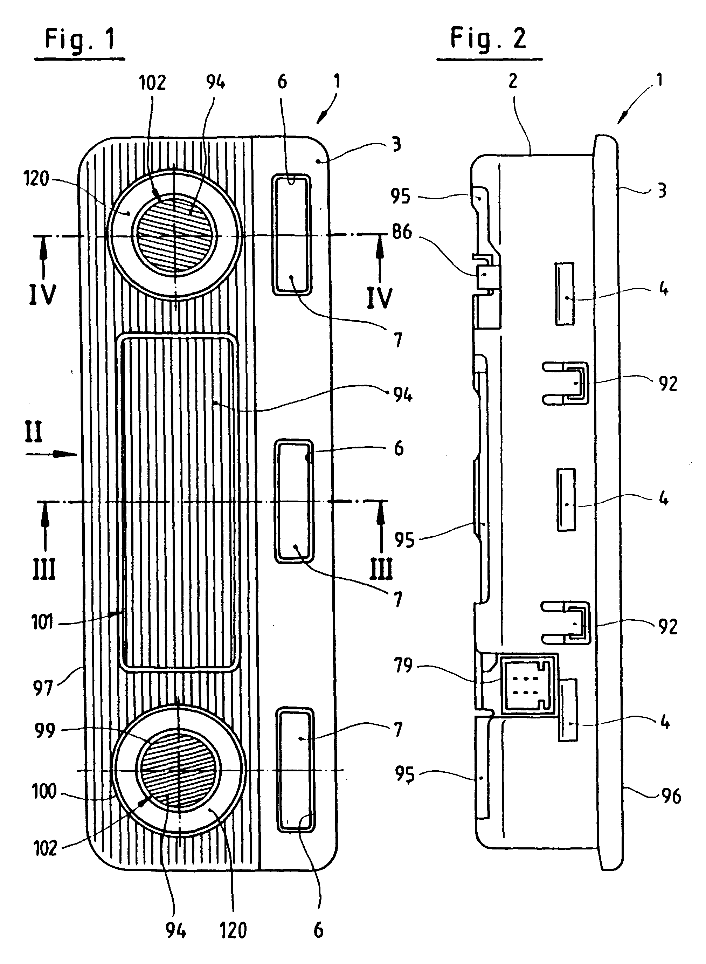

- Fig. 1: eine Draufsicht auf eine Innenleseleuchte mit eingesetzten Tast-Rast-Schaltern,
- Fig. 2: die Seitenansicht auf die Innenleseleuchte gemäß Fig. 1 in Richtung des Pfeiles II,

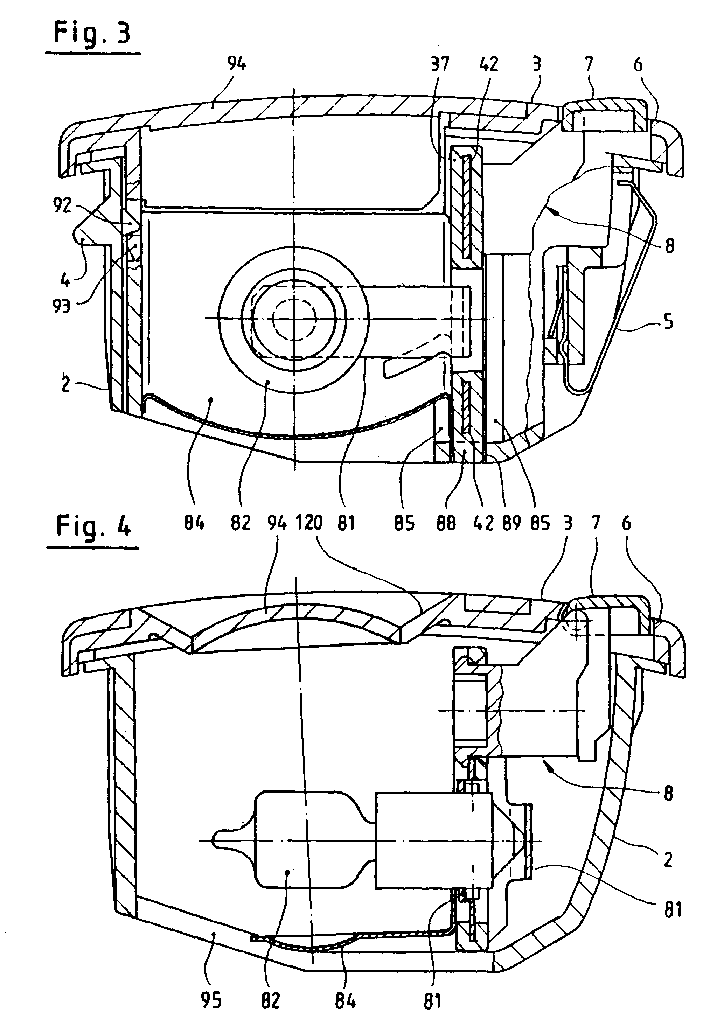

- Fig. 3: einen Schnitt durch die Innenleseleuchte gemäß Fig. 1 in Richtung der Pfeile III-III,
- Fig. 4: einen Schnitt durch die Innenleseleuchte gemäß Fig. 1 in Richtung der Pfeile IV-IV,
- Fig. 5: die Seitenansicht auf die Innenleseleuchte gemäß Fig. 2 im demontierten Zustand,

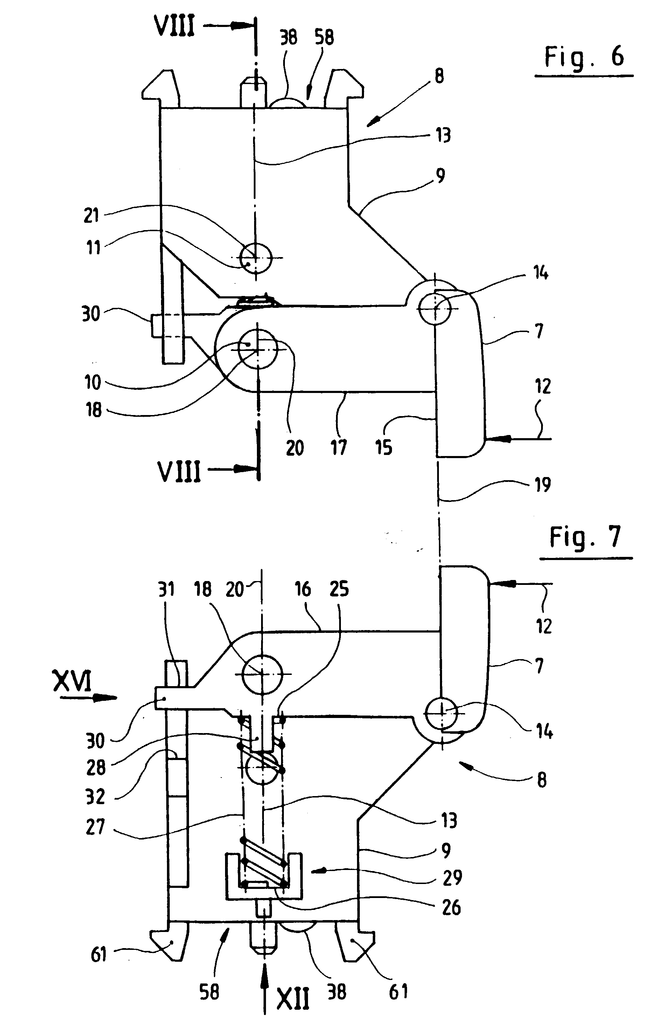

- Fig. 6: eine Seitenansicht auf den Tast-Rast-Schalter gemäß der Erfindung in Richtung des Pfeiles VI gemäß Fig. 5,
- Fig. 7: eine Seitenansicht des Tast-Rast-Schalters gemäß Fig. 5 in Richtung des Pfeiles VII,
- Fig. 8: einen Schnitt durch den Tast-Rast-Schalter gemäß Fig. 6 in Richtung der Pfeile VIII-VIII,
- Fig. 9: einen Schnitt durch den Tast-Rast-Schalter gemäß Fig. 8 in Richtung der Pfeile IX-IX,
- Fig. 10: den Schnitt gemäß Fig. 9 nach dem Umschalten des Tast-Rastschalters und vor Loslassen der Drucktaste,

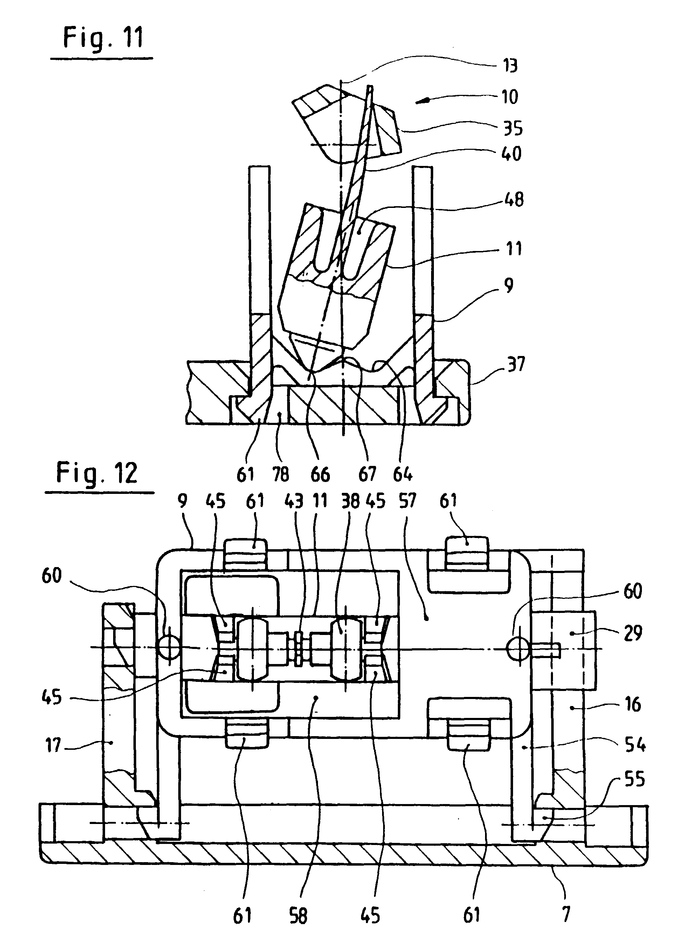

- Fig. 11: den Schnitt gemäß Fig. 9 nach dem Umschalten und nach dem Loslassen der Drucktaste,
- Fig. 12: eine Unteransicht auf den Tast-Rastschalter gemäß Fig. 7 in Richtung des Pfeiles XII mit Teilschnitten in den Lagern,
- Fig. 13: einen Schnitt durch den Tast-Rastschalter gemäß Fig. 8 in Richtung der Pfeile XIII-XIII,
- Fig. 14: den Schnitt gemäß Fig. 13 nach dem Umschalten und vor dem Loslassen der Drucktaste,
- Fig. 15: den Schnitt gemäß Fig. 13 nach dem Umschalten und nach dem Loslassen der Drucktaste,
- Fig. 16: eine Ansicht auf den Tast-Rastschalter gemäß Fig. 7 in Richtung des Pfeiles XVI,
- Fig. 17: einen Schnitt durch einen Tast-Rastschalter alternativ zu Fig. 9
- Fig. 18: eine Teil-Rückansicht auf eine Blende gemäß Fig. 5 in Richtung des Pfeiles XVIII,

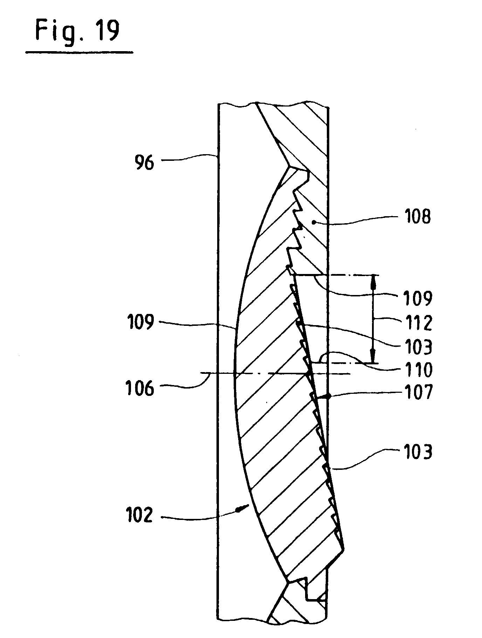

- Fig. 19: einen Schnitt durch Fig. 18 in Richtung der Pfeile XIX-XIX,

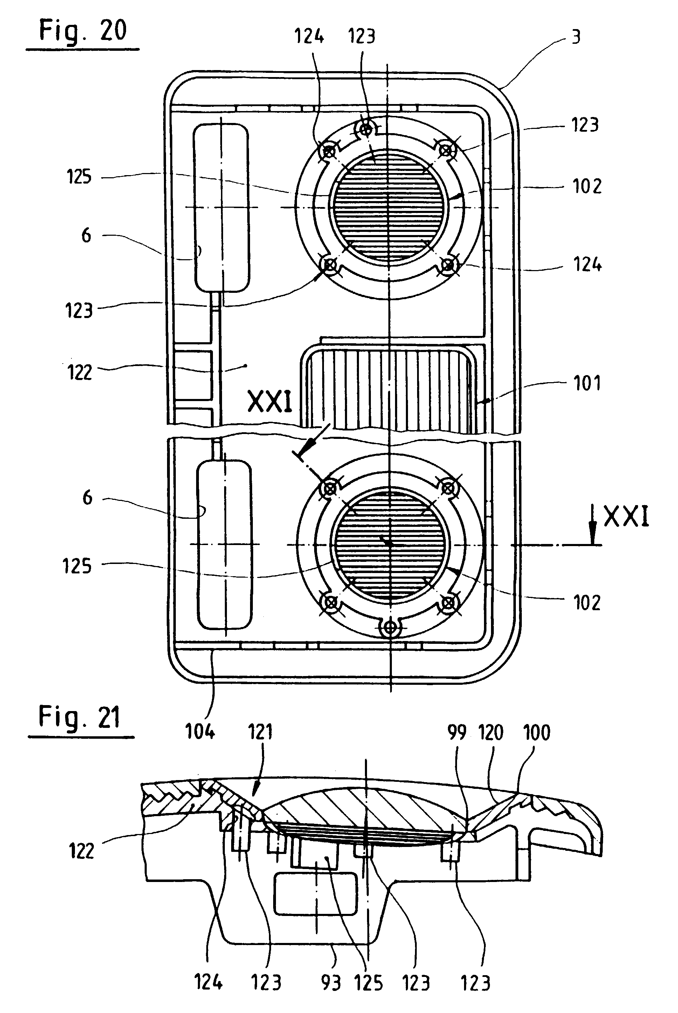

- Fig. 20: eine Rückansicht auf die Blende gemäß Fig. 5 in Richtung des Pfeiles XX mit ausgebrochenem Mittelbereich und
- Fig. 21: einen Teilschnitt durch die Fig. 20 in Richtung der Pfeile XXI-XXI.

Eine Innenleseleuchte 1 weist ein im Querschnitt rechteckförmiges Innenleselicht-Gehäuse 2 und eine Blende 3 auf. Am Innenleselicht-Gehäuse 2 sind Haltevorsprünge 4 und Haltefedern 5 zur Befestigung in einem nicht dargestellten Tableau angebracht. In der Blende 3 sind rechteckige Durchtrittsöffnungen 6 für Drucktasten 7 von Tast-Rast-Schaltern 8 eingelassen. Beim Tast-Rast-Schalter 8 ist die Drucktaste 7 drehbeweglich am Gehäuse 9, der Schaltstößel 10 drehbeweglich an der Drucktaste 7, und die vom Schalststößel 10 beaufschlagte Schaltwippe 11 drehbeweglich am Gehäuse 9 gelagert. Die Betätigung der Drucktaste 7 wird von Hand eingeleitet, wobei die Betätigungsfläche 12 der Drucktaste 7 rechtwinklig zur Achse 13 des Gehäuses 9 ausgerichtet ist. Am entgegengesetzten Ende der Einleitung der Betätigungskraft auf die Betätigungsfläche 12 der Drucktaste 7 befindet sich das Lager 14 zwischen der Drucktaste 7 und dem Gehäuse 9. Auf der Unterseite 15 der Drucktaste 7 befinden sich endseitig zwei Schwenkhebel 16 und 17, in die das Lager 18 zwischen Drucktaste 7 und Schaltstößel 10 integriert ist. In der Ruhestellung 19 fluchtet die Lagerachse 20 des Lagers 18 zwischen der Drucktaste 7 und dem Schalstößel 10 mit der Achse 13 des Gehäuses 9. Auf der Achse 13 des Gehäuses 9 liegt ebenfalls das Lager 21 zwischen dem Gehäuse 9 und der Schaltwippe 11. Somit liegen in der Ruhestellung 19 die Lager 18 und 21 auf der Achse 13 des Gehäuses 9.

Das Zusammenfügen des Lagers 14 zwischen Gehhäuse 9 und Drucktaste 7 erfolgt mittels einer Klipsverbindung 22, das Zusammenfügen des Lagers 18 zwischen Drucktaste 7 und Schaltstößel 10 mittels neuer Klisverbindung 23 und das Zusammenfügen des Lagers 21 zwischen Gehäuse 9 und Schaltwippe 11 durch eine Klipsverbindung 24, wobei Abschrägungen bzw. Einführschrägen das Herstellen der Klipsverbindungen erleichtern.

An dem an der Drucktaste 7 befindlichen Schwenkhebel 16 ist ein Federlager 25 angeformt, welches mittig einen Haltezapfen 28 aufweist. Das Gehäuse 9 besitzt ein Federgegenlager 26, das die Form eines U-Rahmens 29 hat. Zwischen dem Federlager 25 am Schwenkhebel 16 und dem Federgegenlager 26 am Gehäuse 9 ist ein Federelement 27 eingespannt, welches den Schwenkhebel 16 und somit die Drucktaste 7 in ihre Ruhestellung 19 entgegen der Betätigungskraft 12 zurückstellt.

Der an der Drucktaste 7 befindliche Schwenkhebel 16 weist an seinem dem Lager 14 gegenüberliegenden Ende einen Anschlagzapfen 30 auf, der mit am Gehäuse 9 befindlichen oberen Anschlagnocken 31 und unteren Anschlagnocken 32 den Betätigungshub der Drucktaste 7 begrenzt. Beim Betätigen der Drucktaste 7 über die Betätigungsfläche 12 wird der Schwenkhebel 16 entgegen der Druckfeder 27 solange verschwenkt, bis sein Anschlagzapfen 30 an dem unteren Anschlagnocken 32 zur Anlage kommt. Beim Freigeben der Drucktaste 7 wird unter Wirkung der Druckfeder 27 der Schwenkhebel 16 um das Lager 14 zurückgeschwenkt bis der Anschlagzapfen 30 am oberen Anschlagnocken 31 zur Anlage kommt.

Der Schaltstößel 10 weist an seinen Enden die Lager 18 zwischen Schaltstößel 10 und Drucktaste 7 auf. Am Schaltstößel 10 ist weiterhin ein Umschaltfinger 33, der an seinem Ende eine V-Form 34 besitzt, und eine Umschaltkulisse 35, in welcher eine V-förmige Ausnehmung 36 eingelassen ist, angeformt. Der Umschaltfinger 33 und die Umschaltkulisse 35 sind gleichsinnig symmetrisch ausgerichtet, wobei die offenen V-Seiten von Umschaltfinger 33 und Umschaltkulisse 35 einander gegenüberstehen. Der Umschaltfinger 33 und die Umschaltkulisse 35 sind einstückig mit dem Schaltstößel 10 verbunden. Beim Schwenken des Schaltstößels 10 um die Achse 18 schwenkt sowohl der Umschaltfinger 33 als auch die Umschaltkulisse 35 mit. Die Schaltwippe 11 weist an ihren Enden die Lager 21 zwischen Schaltwippe 11 und dem Gehäsue 9 auf. Jeweils symmetrisch zum einen in Richtung der Grundplatte 37 ist eine federbelastete Kontaktbrücke 38 und ein federbelasteter Raststein 39 und zum anderen in Richtung des Schaltstößels 10 eine Umschaltfeder 40 und eine Umschaltfläche 41 vorhanden. Beim Drehen der Schaltwippe 11 im Lager 21 drehen somit die Kontaktbrücke 38, der Raststein 39, die . Umschaltfeder 40 und die Umschaltfläche 41 gleichsinnig mit. Die Grundplatte 37 ist ein umspritztes Stanzgitter, dessen Stanzstreifen 42 zum einen als Strompfad und zum anderen als Kontaktfläche dienen. Die Kontaktbrücke 38 ist als Kontaktrolle ausgebildet, wobei sie als Baugruppe unverlierbar mit einem Halteblech 43 und einer Druckfeder 44 vorliegt, welche wiederum unverlierbar über Führungsfinger 45 in der Schaltwippe 11 gehaltert ist. Der Raststein 39 ist unter Zwischenschaltung einer Druckfeder 46 in einer Bohrung 47 in die Schaltwippe eingesetzt. In entgegengestzter Richtung befindet sich zum einen die Umschaltfeder 40 und zum anderen die Umschaltfläche 41. Die Umschaltfeder 40 ist einstückig aus Kunststoff angespritzt und besitzt somit die Federeigenschaften des Kunststoffes der Schaltwippe 11. Um eine weichere Federeigenschaft zu erhalten, ist durch die Ausnehmung 48 in der Schaltwippe 11 der Anspritzpunkt der Umschaltfeder 40 nach innen verlegt worden. Somit wurde eine wesentlich längere Umschaltfeder 40 geschaffen. Die Umschaltfläche 41 steht rechtwinklig zur Achse 49, in welcher sowohl die Kontaktbrücke 38 als auch der Raststein 39 steht. An ihren Enden weist die Umschaltfläche Begrenzungen 50 auf, welche schräg nach außen laufen. In axialer Richtung ist die Umschaltfläche 41 mit ihren Begrenzungen 50 durch je eine Seitenwand 51 abgeschlossen, so daß die Form eines nach oben offenen Troges vorhanden ist.

Das Gehäuse 9 ist aus einem rechteckigen Rahmen 51 gebildet, an dessen Schmalseiten 53 Ansätze 54 mit Lagerzapfen 55 für das Lager 14 mit der Drucktaste 7 angeformt sind. Durch das Anformen der Ansätze 54 an den rechteckigen Rahmen 52 lassen sich beliebige Hebelverhältnisse herstellen. Außerdem ist das Montieren der Klipsverbindung für das Lager 14 somit besser zu erhalten. Der rechteckige Rahmen 52 des Gehäuses 9 ist nach der Grundplatte 37 hin teilweise durch einen eine Rastkulisse 56 aufweisenden Boden 57 verschlossen. Die Rastkulisse 56 hat ihre Wirkflächen 62 in Richtung des Raststeines 39. Durch die verbleibende Kontaktöffnung 58 ragt die Kontaktbrücke 38 hindurch und gleitet somit auf der Grundplatte 37 bzw. deren Stanzstreifen 42 entlang. An der Unterseite 59 des rechteckigen Rahmens 52 des Gehäuses 9 sind Positionierzapfen 60 sowie Klipsfedern 61 angeformt. Die Positionierzapfen 60 gestatten ein punktgenaues Positionieren des rechteckigen Rahmens 9 des Tast-Rastschalters 8 auf der Grundplatte 37, wobei die Klipsfedern 61 die feste Verbindung zwischen dem rechteckigen Rahmen 9 und der Grundplatte 37 herstellen.

Mittels der Rastkulisse 56, welche im Boden 57 des rechteckigen Rahmens 52 des Gehäuses 9 eingelassen ist, ist zum einen eine stabile Schaltposition 63 mittels der Vertiefung 64 und zum anderen eine stabile Schaltposition 65 mittels der Vertiefung 66 erreichbar, wobei zwischen den Vertiefungen 64 und 66 die Umschaltkuppe 67 angeordnet ist, wodurch sichergestellt ist, daß nur jeweils die stabile Schaltposition 63 bzw. 65 vorliegt.

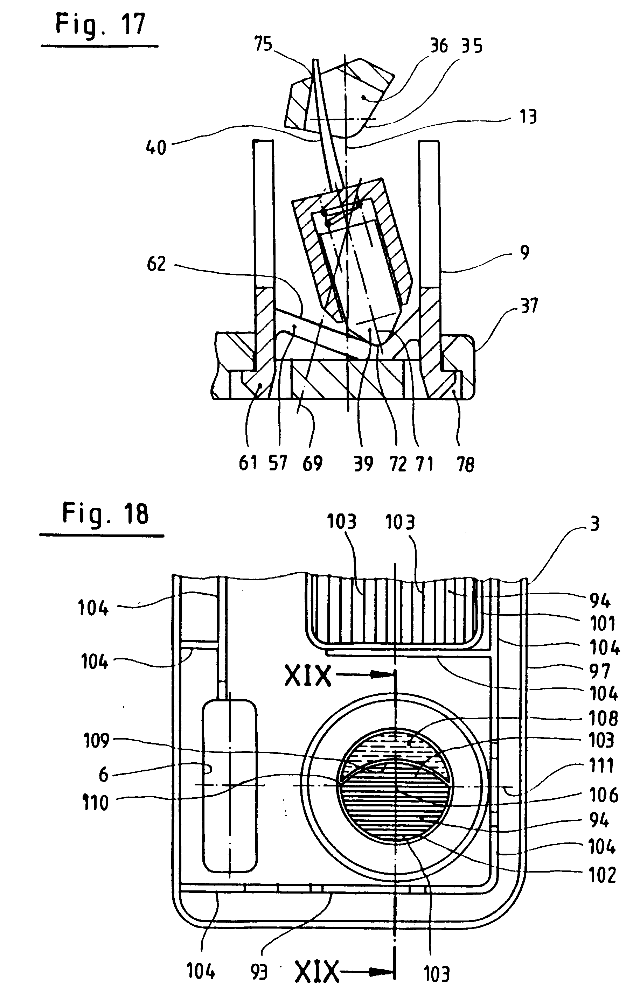

Eine alternative Ausführung ist in Fig. 17 dargestellt. Dort ist im Boden 57 des rechteckigen Rahmens 52 des Gehäuses 9 eine Tastkulisse 68 eingelassen. Mit dieser Tastkulisse 68 ist eine Tast-Schaltposition 69 mittels einer Anschrägung 70 erreichbar. Nach Loslassen der Drucktaste 7 erfolgt selbsttätig unter Wirkung des federbelasteten Raststeines 39 entlang der Anschrägung 70 die Rückstellung in die Ausgangs-schaltposition 71. Die Tastkulisse 68 hat somit nur eine stabile Schaltposition, nämlich die Ausgangsschaltposition 71, welche durch die Vertiefung 72 festgelegt ist.

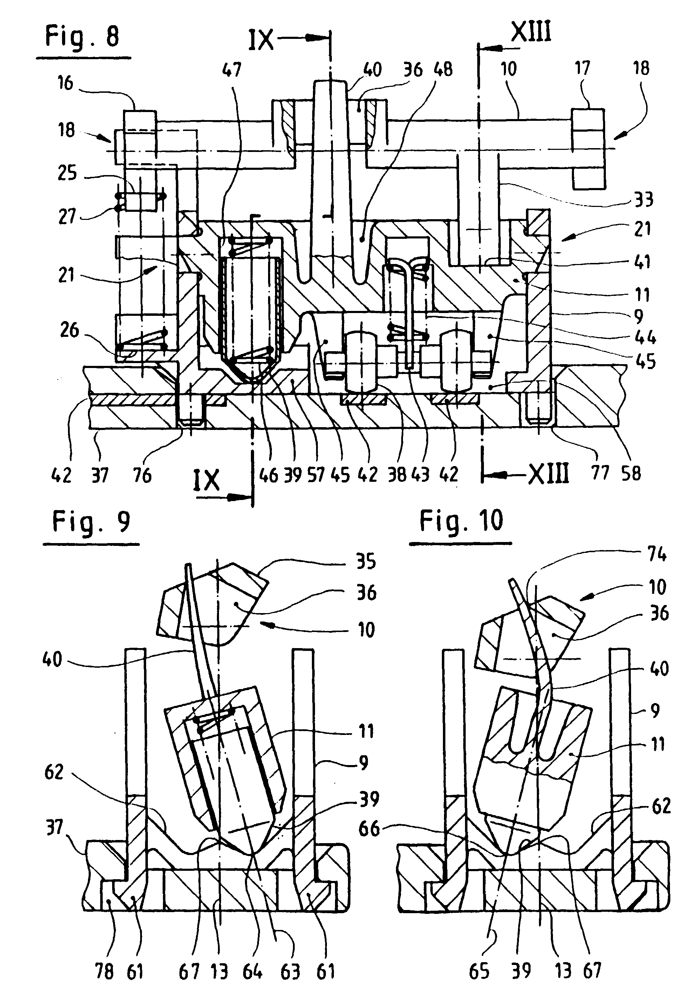

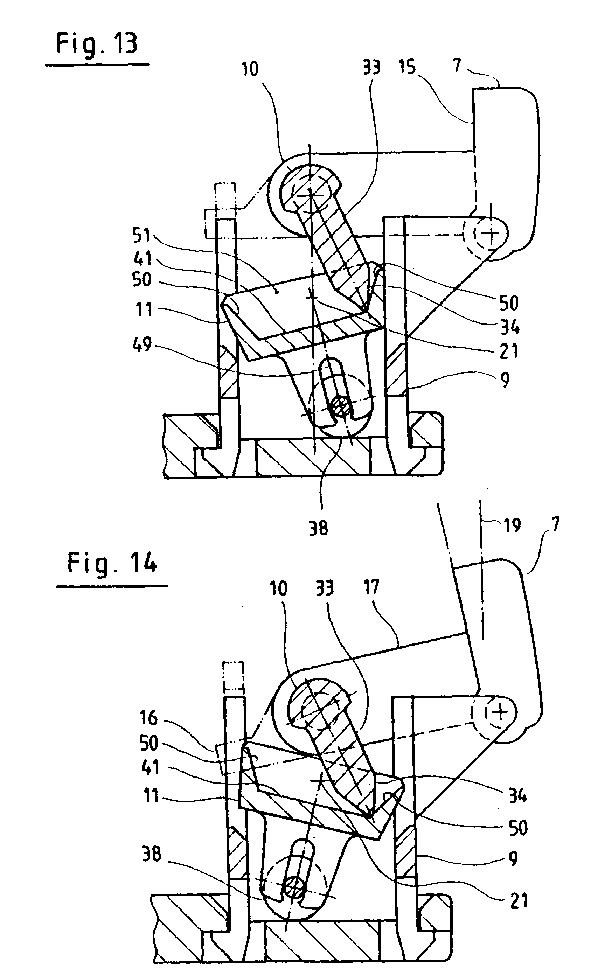

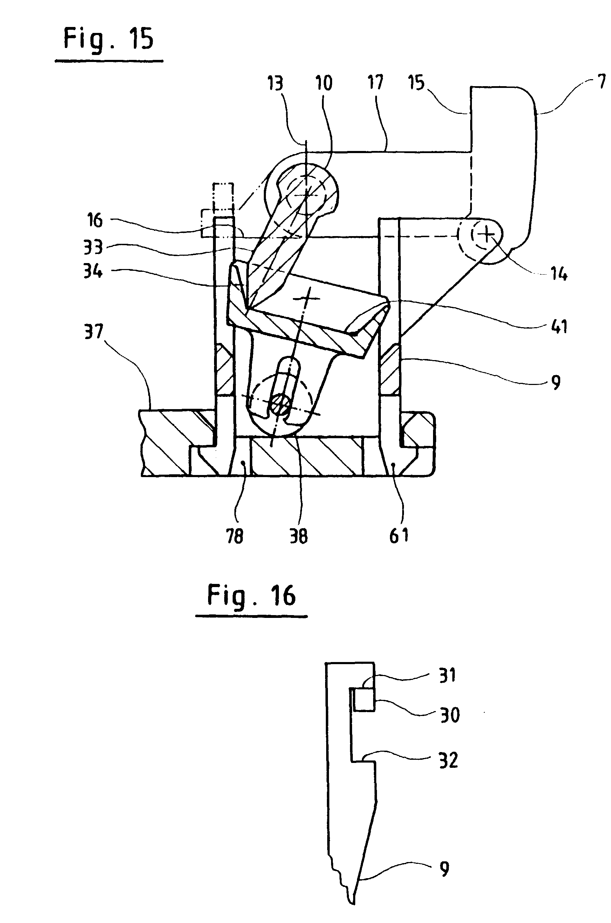

Der gesamte Schaltvorgang gestaltet sich folgendermaßen: Beim Betätigen der Drucktaste 7 in Betätigungsrichtung 12 dreht die Drucktaste 7 mit den Schwenkhebel 16 und 17 sich um das Lager 14. Mit den Schwenkhebeln 16 und 17 wird der Schaltstößel 10 ins Innere des Gehäuses 9 bewegt, und der am Schaltstößel 10 befindliche Umschaltfinger 33 drückt dabei die Umschaltfläche 41 der Schaltwippe 11 und dreht damit die Schaltwippe 11 um ihr Lager 21 (sh. Fig. 13 und 14). Beim Umschwenken der Umschaltfläche 41 schwenkt die Kontaktrolle 38 mit und stellt einen Strompfad her bzw. unterbricht einen solchen.. Gleichzeitig wird der Raststein 39 aus der Vertiefung 64 über die Umschaltkuppe 67 in die Vertiefung 66 bewegt (sh. Fig. 9 und 10). Die Umschaltkulisse 35 des Schaltstößels 10 bewegt sich in Richtung des Gehäuses 9. Die Umschaltfeder 40 kommt an der Kante 74 der V-förmigen Ausnehmung 36 zur Anlage. Beim Loslassen der Drucktaste 7 wird diese unter Wirkung der Feder 27 in die Ruhestellung 19 bewegt. Gleichzeitig dreht die Umschaltfeder 40 durch Anlage an der Kante 74 des Schaltstößels 10 den Schaltstößel 10 in die Lage gemäß Fig. 15, wobei die V-förmige Spitze 34 des Umschaltfingers 33 in der Ecke zwischen Umschaltfläche 41 und Begrenzung 50 zur Anlage kommt. Der Tast-Rast-Schalter ist somit für die nächstfolgende Bedienung bereit.

Bei der alternativen Ausführung gemäß Fig. 17, nämlich dem Tastschalter, wird der Raststein 39 stets in die Vertiefung 72 zurückgeführt. Die Umschaltfeder 40 wirkt dabei immer mit der Kante 75 zusammen, wodurch der Schaltstößel 10 mit seinem Umschaltfinger 33 stets die Lage gemäß Fig. 13 einnimmt.

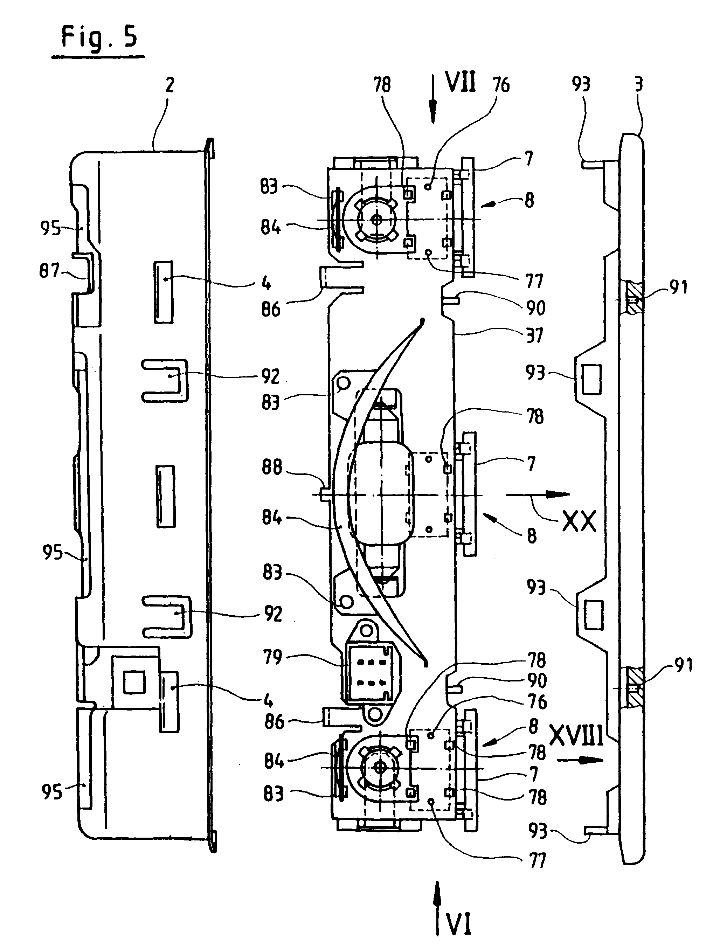

Die Grundplatte 37 weist Bohrungen 76 und 77 auf, in die die Positionierzapfen 60 des Gehäuses 9 eingesetzt werden. Die Bohrung 76 ist hierbei zylindrisch ausgelegt um das Gehäuse 9 des Tast-Rast-Schalters 8 positionsgenau festzulegen. Die Bohrung 77 ist als Langloch ausgebildet, um einen Toleranzausgleich zu ermöglichen. Weiterhin sind in der Grundplatte 37 Klipsausnehmungen 78 für die Klipsfedern 61 des Gehäuses 9 vorhanden, mit deren Hilfe das Gehäuse 9 und die Grundplatte 37 mittels Klipsverbindungen verbunden werden. Die Grundplatte 37 ist ein umspritztes Stanzgitter mit Stanzstreifen 42. Alternativ dazu kann die Grundplatte 37 als Leiterplatte hergestellt werden, wobei die Stanzstreifen 42 durch Leiterbahnen ersetzt werden. Auf einer zusammenhängenden Grundplatte 37 sind, wie in Fig. 5 ersichtlich, drei Tast-Rast-Schalter 8 über Klipsverbindungen an der Grundplatte 37 befestigt. Die Kontaktbrücke 38 der Tast-Rast-schalter 8 arbeiten somit mit einer Grundplatte 37 zusammen, wobei hierzu nur ein Anschlußstecker 79 für den elektrischen Anschluß aller Tast-Rast-Schalter 8 an der Grundplatte 37 vorhanden ist. Im Innenleselicht-Gehäuse 2 ist eine Gehäuseausnehmung 80 eingelassen, durch welche der Anschlußstecker 79 erreichbar ist. An der Grundplatte 37 sind weiterhin Haltewinkel 81 angebracht, in welche Glühlampen 82 eingesetzt werden. An Vorrichtungen 83 ist das Befestigen von Reflektoren 84 möglich, mittels denen die Lichtstrahlen der Glühlampen 82 durch die durchsichtigen Felder in der Blende 3 gebündelt abgestrahlt werden.

Im Innenleselicht-Gehäuse 2 sind Führungen 85, in welche die Grundplatte 37 der Tast-Rast-Schalter 8 einsetzbar ist. Die Grundplatte 37 weist Klipsnasen 86 auf, die mit entsprechenden Absätzen 87 im Innenleselicht-Gehäuse 2 zusammenwirken, wobei ein Steg 88, der an der Grundplatte 37 angeformt ist, in eine Bohrung 89 im Innenleselicht-Gehäuse 2 eingreift. Auf der gegenüberliegenden Seite der Grundplatte 37 sind Bolzen 90 angeformt, die in Löcher 91 der Blende 3 eintauchen. Am Innenleselicht-Gehäuse 2 sind weiterhin Klipsfedern 92 angespritzt, welche mit Laschen 93 an der Blende 3 zusammenwirken und die Einheiten miteinander verklipsen. Durch diese Gestaltung läßt sich die montierte Grundplatte 37, versehen mit Tast-Rastschaltern 8, den Glühlampen 82, den Reflektoren 84 und dem Anschlußstecker 79, in das Innenleselicht-Gehäuse 2 einsetzen. Durch den Steg 88 ist gewährleistet, daß die montierte Grundplatte nicht verkehrt montiert werden kann. Über die so vormontierte Grundplatte 37 mit Innenleselicht-Gehäuse 2 wird die Blende 3 aufgeklipst. In der Blende 3 sind die Durchtrittsöffnungen 6 für die Drucktasten 7 vorhanden. Nach dem Zusammenfügen der Einzelteile ragen die Drucktasten 7 über die Oberfläche der Blende 3 hervor. Oberhalb der Glühlampen 82 befinden sich in der Blende 3 durchscheinende Bereiche 94. Die Blende 3 ist in einem Zweifarbenspritzverfahren hergestellt, wodurch durchscheinende und lichtundurchlässige Bereiche leicht herstellbar sind und der äußere Bereich der Blende 3 ein attraktives Aussehen erhält.

Der Bereich der Oberfläche 96 ist von der der Durchtrittsöffnungen 6 für die Drucktasten 7 entgegengesetzten Seitenbegrenzung 27 bis hin zur Trennfläche 98 aus dem lichtdurchlässigen Material gespritzt. Bei den innerhalb dieses Bereiches vorliegenden Kegelstümpfen tritt das lichtundurchlässige Material zwischen dem kleinen Durchmesser 99 und dem großem Durchmesser 100 bis zur Oberfläche hervor. Jeder Drucktaste 7 ist ein durchscheinender Bereich 94 in der Blende 3 zugeordnet. Zur mittleren Drucktaste 7 gehört das große rechteckige Lichtfenster 101. Die Punktstrahler 102 gehören zu den äußeren Drucktasten 7. Die Teilansicht auf die Blende 3 nach Fig. 18 zeigt eine Durchtrittsöffnung 6 für eine Drucktaste, das Lichtfenster 101 und einen Punktstrahler 102 von ihrer Rückansicht. Stege 104 verleihen der Blende 3 eine ausreichende Formstabilität. Laschen 93 die an den Stegen 104 angeformt sind dienen zum Verklipsen mit dem Innenleselichtgehäuse 2. Im Lichtfenster 101 und in dem Punktstrahler 102 sind die Prismen auf der Lichteintrittsfläche 107 sichtbar, welche das Licht den Anforderungen entsprechend umlenken. Die Lichtaustrittsfläche 105 der Punktstrahler 102, welche den Glühlampen 82 abgewandt ist, bildet einen symmetrisch zu einer in die Tiefe des Punktstrahlers verlaufenden, mittigen Achse 106 ausgerichteten konvexen Kugelabschnitt. Schräg zur Achse 106 ist die den Glühlampen 82 zugewandte Lichteintrittsfläche 107 des Punktstrahlers 102 geneigt. Eine Lasche 108 aus lichtundurchlässigem Material deckt teilweise die Lichteintrittsfläche 107 ab. Die freie Kante 109 der Lasche 108 ist der Achse 106 zugewandt und verläuft in einem Radius. Die Übergangskante 110 des Radiusses zur Blende 3 stößt annähernd im Bereich einer Symmetrielinie 111 in den Kreisumfang des Punktstrahlers 102. Die Bogenhöhe 112 des Radiusses der Lasche 108 beträgt annähernd die Hälfte des Radiusses des Punktstrahlers 102. Zwei nebeneinanderliegende Quadranten des Punktstrahlers 102 sind somit teilweise durch die Lasche 108 abgedeckt. Ensprechend der Schräglage der Symmetrielinie 111, nach der auch die Prismen 103 ausgerichtet sind, erfolgt die Umlenkung der Lichtstrahlen, welche durch den Punktstrahler 102 hindurchtreten.

Die Lichtausbeute bei den Punktstrahlern 102 läßt sich beträchtlich erhöhen, wenn die Oberfläche 120 des umlaufenden Bereiches zwischen dem kleinen Durchmesser 99 und dem großen Durchmesser 100 mit einer lichtreflektierenden Schicht versehen ist. Diese Oberfläche 120, welche mit der lichtreflektierenden Schicht versehen ist, ist Teil eines Ringreflektors 121. Der Ringreflektor 121 wird als Einzelteil in einem gesonderten Arbeitsgang hergestellt. Dieses Einzelteil wird dann in das Zweifarben-Spritzverfahren eingegliedert, wobei als erstes das als Träger 122 dienende lichtundurchlässige Teil gespritzt wird. Beim Spritzen werden Aufnahmen für den Ringreflektor 121 miteingeformt. Nach dem Spritzvorgang des Trägers 122 wird dieser mit dem Ringreflektor 121 bestückt. Nach dem Bestücken erfolgt das Umspritzen mit dem durchscheinenden Werkstoff für die Lichtfenster 101 und die Punktstrahler 102 als Schlußarbeitsgang. Der Ringreflektor 121 wird als Kunststoffspritzteil hergestellt. Die von der Blende 3 her sichtbaren Oberflächen des Ringreflektors 121 sind hochglänzend, was bedeutet, daß die dementsprechenden Oberflächen im Werkzeug ebenfalls hochglanzpoliert sein müssen. Weiterhin können mindestens die von der Blende 3 her sichtbaren Oberflächen verchromt sein, was durch eine abdeckende Aufnahme möglich ist. Genausogut ist es auch denkbar, die gespritzten Ringreflektoren 121 im Tauchbad einer gesamten Oberflächenbehandlung zu unterziehen. Im Träger 122 sind Aufnahmen für den Ringreflektor 121 vorgesehen. Diese Aufnahmen sind als Aufnahmebohrungen 124 eingespritzt. Am Ringreflektor 121 sind auf seiner der Blende 3 abgewandten Seite Aufnahmezapfen 123 vorhanden. Mittels dieser Aufnahmezapfen 123 werden die Ringreflektoren sortiert, ausgerichtet und der für sie bestimmten Aufnahme zugeführt. Nach dem Zuführen in die Aufnahmen erfolgt dort das Einstecken der Aufnahmezapfen 123 in die am Träger 122 eingelassenen Aufnahmebohrungen 124. Die Oberfläche 120 der Ringreflektoren 121 soll nicht mehr von flüssigem Kunststoff berührt werden. Dadurch soll vermieden werden, daß die Oberfläche 120, welche vom Chrom bedeckt ist, Wärmeverwerfungen zeigt oder sich das Chrom ablöst. Daher sind im Werkzeug Hohlräume vorgesehen, über die die Punktstrahler 102 beim Spritzen Zapfen 125 erhalten, an denen die Angußkanäle angeschlossen sind. Werkzeugmäßig ist also dafür Sorge getragen, daß über die Oberfläche 120 kein flüssiger Kunststoff mehr fließt.

Die Prismen 103 sowie der konvexe Kugelabschnitt der Lichtaustrittsfläche 105 und auch die Bereiche zwischen dem kleinen Durchmesser 99 und dem großen Durchmesser 100 besitzen eine sehr saubere Oberfläche, was dadurch erreicht wird, daß die diese Flächen formenden Werkzeugoberflächen poliert sind.

Auf der Rückseite des Innenleselicht-Gehäuses 2 sind Ausnehmungen 95 eingelassen, um die Wärmeabfuhr zu gewährleisten.

## Patentansprüche

1. Tast-Rastschalter, insbesondere für die Innenleseleuchte eines Kraftfahrzeuges, mit
- einem Gehäuse (9) und einer zugehörigen Grundplatte (37),
- einer federbelasteten, gegenüber dem Gehäuse (9) bewegbaren Drucktaste (7),
- einem durch die Drucktaste (7) bewegbaren Schaltstößel (10) und
- einer durch den Schaltstößel (10) schwenkbaren Schalthebel (11) mit einer eingesetzten, auf der Grundplatte (37) Schlußkontakte (42) beaufschlagenden, federbelasteten Kontaktbrücke,
dadurch gekennzeichnet, daß
- die Drucktaste (7) drehbeweglich am Gehäuse (9), der Schaltstößel (10) drehbeweglich an der Drucktaste (7), und die Schaltwippe (11) drehbeweglich am Gehäuse (9) gelagert ist,
- die Betätigungsfläche (12) der Drucktaste (7) rechtwinklig zur Längsachse (13) des Gehäuses (9) ausgerichtet ist,
- das Lager (14) zwischen der Drucktaste (7) und dem Gehäuse (9) am entgegengesetzten Ende der Einleitung der Betätigungskraft auf die Betätigungsfläche (12) der Drucktaste (7) vorgesehen ist, und
- auf der der Betätigungsfläche (12) gegenüberliegenden Unterseite (15) der Drucktaste (7) zwei senkrecht zu der Betätigungsfläche (12) verlaufende Schwenkhebel (16, 17) angeformt sind, in die das Lager (18) zwischen der Drucktaste (7) und dem Schaltstößel (10) integriert ist.

2. Tast-Rastschalter nach m der Anspruch 1, dadurch gekennzeichnet, daß das Lager (21) zwischen Gehäuse (9) und Schaltwippe (11) auf der Längsachse (13) des Gehäuses (9) angeordnet ist.

3. Tast-Rastschalter nach Anspruch 1 oder 2, dadurch gekennzeichnet, daß das Zusammenfügen des Lagers (14) zwischen Gehäuse (9) und Drucktaste (7), des Lagers (18) zwischen Drucktaste (7) und Schaltstößel (10) und des Lagers (21) zwischen Gehäuse (9) und Schaltwippe (11) jeweils durch Klipsverbindungen (22, 23, 24) erreicht wird.

4. Tast-Rastschalter nach einem der Ansprüche 1 bis 3, dadurch gekennzeichnet, daß mindestens einer der an der Drucktaste (7) befindlichen Schwenkhebel (16, 17) ein Federlager (25) besitzt, daß am Gehäuse (9) ein Federgegenlager (26) angeformt ist und daß zwischen dem Federlager (25) am Schwenkhebel (16) und dem Federgegenlager (26) am Gehäuse (9) ein Federelement (27) eingespannt ist.

5. Tast-Rastschalter nach einem der Ansprüche 1 bis 4, dadurch gekennzeichnet, daß an mindestens einem der an der Drucktaste (7) befindlichen Schwenkhebel (16, 17) ein Anschlagzapfen (30) angeformt ist, der mit am Gehäuse (9) befindlichen oberen Anschlagnocken (31) und unteren Anschlagnocken (32) den Betätigungshub der Drucktaste (7) begrenzt.

6. Tast-Rastschalter nach einem der Ansprüche 1 bis 5, dadurch gekennzeichnet, daß der Schaltstößel (10) an seinen Enden die Lager (18) zwischen Schaltstößel (10) und Drucktaste (7) aufweist, daß am Schaltstößel (10) ein Umschaltfinger (33), der an seinem Ende deine V-Form (34) besitzt und eine Umschaltkulisse (35), in welche eine V-förmige Ausnehmung (36) eingelassen ist, angeformt sind, wobei Umschaltfinger (33) und Umschaltkulisse (35) gleichsinnig symmetrisch ausgerichtet sind, und die offenen V-Seiten von Umschaltfinger (33) und Umschaltkulisse (35) einander gegenüberstehen.

7. Tast-Rastschalter nach einem der Ansprüche 1 bis 6, dadurch gekennzeichnet, daß die Schaltwippe (11) an ihren Enden die Lager (21) zwischen Schaltwippe (11) und Gehäuse (9) und jeweils symmetrisch, in Richtung einer Grundplatte (37) eine Kontaktbrücke (38) und einen federbelasteten Raststein (39) und in Richtung des Schaltstößels (10) eine Umschaltfeder (40) und eine Umschaltfläche (41) aufweist.

8. Tast-Rastschalter nach einem der Ansprüche 1 bis 7, dadurch gekennzeichnet, daß das Gehäuse (9) aus einem rechteckigen Rahmen (52) gebildet ist, an dessen Schmalseiten (53) Ansätze (54) mit Lagerzapfen (55) für das Lager (14) mit der Drucktaste (7) angeformst sind, und der Rahmen (52) nach der Grundplatte (37) hin teilweise durch einen, eine Rastkulisse (56) aufweisenden Boden (57) verschlossen ist, wobei durch die verbleibende Kontaktöffnung (58) die Kontaktbrücke (38) hindurchragt und an der Unterseite (59) des Rahmens (52) des Gehäuses (9) Positionierzapfen (60) sowie Klipsfedern (61) angeformt sind.

9. Tast-Rastschalter nach Anspruch 8, dadurch gekennzeichnet, daß im Boden (57) des rechteckigen Rahmens (52) des Gehäuses (9) einen Rastkulisse (56) eingelassen ist, durch die eine stabile Schaltposition (63) mittels der Vertiefung (64) und eine stabile Schaltposition (65) mittels der Vertiefung (66) erreichbar ist, wobei zwischen den Vertiefungen (64, 66) die Umschaltkuppe (67) angeordnet ist.

10. Tast-Rastschalter nach Anspruch 8, dadurch gekennzeichnet, daß im Boden (57) des rechteckigen Rahmens (52) des Gehäuses (9) eine Tastkulisse (68) eingelassen ist, durch die eine Tast-Schaltposition (69) mittels der Anschrägung (70) erreichbar ist, wobei die Tast-Schaltposition (69) nach Loslassen der Drucktaste (7) selbsttätig unter Wirkung des federbelasteten Raststeines (39) in die Ausgangs-Schaltposition (71) rückstellt.

11. Tast-Rastschalter nach einem der Ansprüche 6 bis 10, dadurch gekennzeichnet, daß der Umschaltfinger (33) des Schaltstößels (10) mit der Umschaltfläche (41) der Schaltwippe (11) zusammenwirkt um die Schaltpositionen (63, 65) umzuschalten, daß die Umschaltfeder (40) der Schaltwippe (11) in die Umschaltkulisse (35) des Schaltstößels (19) eintaucht und die Öffnung (73) durchdringt, um den Schaltstößel (10) nach Loslassen der Drucktaste (7) für die nächste Betätigung zu aktivieren, daß der in einer Bohrung (47) federbelastet geführte Raststein (39) der Schaltwippe (11) in der Rastkulisse (56) oder Tastkulisse (68) des Bodens (57) des Gehäuses (9) die unterschiedlichen Schaltpositionen (63 und 65 oder 69) festlegt, und daß an der Schaltwippe (1) eine federbelastete Kontaktbrücke (38) unverliebar zwischen Führungslaschen (45) gehaltert ist.

12. Tast-Rastschalter nach einem der Ansprüche 1 bis 11, dadurch gekennzeichnet, daß die Grundplatte (37) Bohrungen (76, 77) für die Positionierzapfen (60) des Gehäuses (9) und Klipsausnehmungen (78) für die Klipsfedern (61) des Gehäuses (9) aufweist und Gehäuse (9) und Grundplatte (37) mittels Klipsverbindungen verbunden ist.

13. Tast-Rastschalter nach einem der Ansprüche 1 bis 12, dadurch gekennzeichnet, daß die Grundplatte (37) ein umspritztes Stanzgitter ist.

14. Tast-Rastschalter nach einem der Ansprüche 1 bis 12, dadurch gekennzeichnet, daß die Grundplatte (37) eine Leiterplatte mit darauf befindlichen Leiterbahnen ist.

15. Tast-Rastschalter nach einem der Ansprüche 1 bis 14, dadurch gekennzeichnet, daß mehreren Tast-Ratschaltern eine Grundplatte (37) zugeordnet ist.

16. Tast-Rastschalter nach einem der Ansprüche 1 bis 15, dadurch gekennzeichnet, daß an der Grundplatte (37) ein Anschlußstecker (79) für den elektrischen Anschluß der Tast-Rast-Schalter (8) vorgesehen ist.

17. Tast-Tastschalter nach einem der Ansprüche 1 bis 16, dadurch gekennzeichnet, daß an der Grundplatte (37) Kontakt-Haltewinkel (81) für das Einsetzen von Glühlampen (82) und Vorrichtungen (83) für das Befestigen von Reflektoren (84) einstückig angebracht sind.

18. Tast-Rastschalter nach einem der Ansprüche 1 bis 17, dadurch gekennzeichnet, daß die Grundplatte (37) in Führungen (85) eines Innenleselicht-Gehäuses (2) eingesetzt ist, daß die Grundplatte (37) Klipsnasen (86) aufweist, die mit entsprechenden Absätzen (87) am Innenleselicht-Gehäuse (2) zusammenwirken, daß ein Steg (88) an der Grundplatte (37) angeformt ist, der in eine Bohrung (89) im Innenleselicht-Gehäuse (2) eingreift, daß an der Grundplatte (37) Bolzen (90) angeformt sind, die in Löcher (91) einer Blende (3) eintauchen, daß am Innenleselicht-Gehäuse (2) Klipsfedern (92) angespritzt sind, die mit Laschen (93) an der Blende (3) zusammenwirken, daß in der Blende (3) Ausnehmungen (6) für die Drucktasten (7) vorhanden sind, und daß in die Blende (3) durchscheinende Bereiche (94) eingelassen sind.

19. Tast-Rastschalter nach Anspruch 18, dadurch gekennzeichnet,daß die durchscheinenden Bereiche (94) der Blende (3) aus einem Lichtfenster (101) und mindestens einem Punkstrahler (102) bestehen.

20. Tast-Rastschalter nach Anspruch 18 oder 19, dadurch gekennzeichnet, daß mindestens ein durchscheinender Bereich (94) der Blende (3) auf der der Glühlampe (82) zugewandten Seite mit Prismen (103) versehen ist.

21. Tast-Rastschalter nach Anspruch 19 oder 20, dadurch gekennzeichnet, daß eine nach außen, der Glühlampe (82) abgewandte Lichtaustrittsfläche (105) des Punktstrahlers (102) einen symmetrisch, zu einer Achse (106) ausgerichteten konvexen Kugelabschnitt bildet, und eine der Glühlampe (82) zugewandte Lichteintrittsfläche (107) schräg zur Achse (106) geneigt ist.

22. Tast-Rastschalter nach Anspruch 21, dadurch gekennzeichnet, daß die Lichteintrittsfläche (107) teilweise durch eine aus lichtundurchlässigem Material bestehenden Lasche (108) abgedeckt ist, wobei eine freie, der Achse (106) zugewandte Kante (109) der Lasche (108) einen Radius bildet, dessen Übergangskanten (110) zur Blende (3) annähernd im Bereich einer Symmetrielinie (111) des Punktstrahlers (102) liegen, und die Bogenhöhe (112) des Radiusses der Lasche (108) annähernd die Hälfte des Radiusses des Punktstrahlers (102) beträgt.

23. Tast-Rastschalter nach einem der Ansprüche 19 bis 22, dadurch gekennzeichnet, daß die Oberfläche (120) des umlaufenden Bereiches zwischen dem kleinen Durchmesser (99) und dem großen Durchmesser (100) des Punktstrahlers (102) mit einer lichtreflektierenden Schicht versehen ist.

24. Tast-Rastschalter nach Anspruch 23, dadurch gekennzeichnet, daß die Oberfläche (120) mit der lichtreflektierenden Schicht Teil eines als Einzelteil ausgebildeten Ringreflektors (121) ist.

25. Tast-Rastschalter nach Anspruch 24, dadurch gekennzeichnet, daß der Ringreflektor (121) ein Kunststoffspritzteil ist, dessen von der Blende (3) her sichtbare Oberflächen hochglanzpoliert oder verchromt sind.

26. Tast-Rastschalter nach Anspruch 24 oder 25, dadurch gekennzeichnet, daß der Ringreflektor (121) auf seiner der Blende (3) abgewandten Seite Aufnahmezapfen (123) trägt.

27. Tast-Rastschalter nach einem der Ansprüche 19 bis 26, dadurch gekennzeichnet, daß die Punktstrahler (102) über an Zapfen (125) angeschlossene Angußkanäle gespritzt sind, wobei der durchscheinende Werkstoff nicht über die Oberfläche (120) des Ringreflektors (121) fließt.

## Claims

1. Locking key switch, more especially for the interior reading light of an automotive vehicle, having
- a housing (9) and an associated base plate (37);
- a spring-loaded push-button (7), which is displaceable relative to the housing (9);
- a switching rod (10), which is displaceable by the push-button (7); and
- a switch lever (11), which is pivotable by the switching rod (10) and has an inserted, spring-loaded contact bridge actuating closing contacts (42) on the base plate (37);
characterised in that
- the push-button (7) is rotatably mounted on the housing (9), the switching rod (10) is rotatably mounted on the push-button (7), and the switch rocker (11) is rotatably mounted on the housing (9);
- the actuation face (12) of the push-button (7) is aligned at right angles to the longitudinal axis (13) of the housing (9);
- the bearing (14) between the push-button (7) and the housing (9) is provided at the opposite end from the input of the actuation force on the actuation face (12) of the push-button (7); and
- two pivot levers (16, 17), extending perpendicular to the actuation face (12), are shaped to fit on the underside (15) of the push-button (7) situated opposite the actuation face (12), the bearing (18) between the push-button (7) and the switching rod (10) being incorporated in said levers.

2. Locking key switch according to claim 1, characterised in that the bearing (21) between housing (9) and switch rocker (11) is disposed on the longitudinal axis (13) of the housing (9).

3. Locking key switch according to claim 1 or 2, characterised in that the bearing (14) between housing (9) and push-button (7), the bearing (18) between push-button (7) and switching rod (10) and the bearing (21) between housing (9) and switch rocker (11) are respectively interconnected by clip-in connections (22, 23, 24).

4. Locking key switch according to one of claims 1 to 3, characterised in that at least one of the pivot levers (16, 17), situated on the push-button (7), has a resilient bearing (25), in that a resilient counter-bearing (26) is shaped to fit on the housing (9), and in that a resilient element (27) is clamped in position between the resilient bearing (25) on the pivot lever (16) and the resilient counter-bearing (26) on the housing (9).

5. Locking key switch according to one of claims 1 to 4, characterised in that a stop pin (30) is shaped to fit on at least one of the pivot levers (16, 17) situated on the push-button (7) and defines the actuation movement of the push-button (7) by means of upper stop cams (31) and lower stop cams (32) situated on the housing (9).

6. Locking key switch according to one of claims 1 to 5, characterised in that the switching rod (10) comprises at its ends the bearings (18) between switching rod (10) and push-button (7), in that a switch-over projection (33), which has a V-shaped configuration (34) at its end, and a switch-over slide (35), in which a V-shaped recess (36) is provided, are shaped to fit on the switching rod (10), switch-over projection (33) and switch-over slide (35) being orientated symmetrically in identical directions, and the open V-shaped sides of switch-over projection (33) and switch-over slide (35) being situated opposite each other.

7. Locking key switch according to one of claims 1 to 6, characterised in that the switch rocker (11) comprises, at its ends, the bearings (21) between switch rocker (11) and housing (9) and respectively symmetrically, in the direction of a base plate (37), a contact bridge (38) and a spring-loaded locking block (39) and, in the direction of the switching rod (10), a switch-over spring (40) and a switch-over face (41).

8. Locking key switch according to one of claims 1 to 7, characterised in that the housing (9) is formed from a rectangular frame (52), attachments (54) with bearing pins (55) for the bearing (14) with the push-button (7) being shaped to fit on the narrow sides (53) of said frame and, in the direction of the base plate (37), the frame (52) is closed partially by a base (57), which comprises a locking slide (56), the contact bridge (38) protruding through the remaining contact aperture (58), and positioning pins (60) as well as clip-in springs (61) being shaped to fit on the underside (59) of the frame (52) of the housing (9).

9. Locking key switch according to claim 8, characterised in that a locking slide (56) is inserted in the base (57) of the rectangular frame (52) of the housing (9), through which slide a stable switching position (63) is achievable by means of the indentation (64), and a stable switching position (65) is achievable by means of the indentation (66), the switch-over dome (67) being disposed between the indentations (64, 66).

10. Locking key switch according to claim 8, characterised in that a key slide (68) is inserted in the base (57) of the rectangular frame (52) of the housing (9), through which slide a key-type switching position (69) is achievable by means of the inclined portion (70), the key-type switching position (69) automatically returning to the initial switching position (71) by the action of the spring-loaded locking block (39) once the push-button (7) has been released.

11. Locking key switch according to one of claims 6 to 10, characterised in that the switch-over projection (33) of the switching rod (10) co-operates with the switch-over face (41) of the switch rocker (11) in order to switch-over the switching positions (63, 65), in that the switch-over spring (40) of the switch rocker (11) extends into the switch-over slide (35) of the switching rod (19) and penetrates the aperture (73) in order to activate the switching rod (10) for the next actuation once the push-button (7) has been released, in that the locking block (39) of the switch rocker (11) is guided in a bore (47) in a spring-loaded manner and secures the various switching positions (63 and 65 or 69) in the locking slide (56) or the key slide (68) of the base (57) of the housing (9), and in that a spring-loaded contact bridge (38) is non-detachably retained between guide lugs (45) on the switch rocker (11).

12. Locking key switch according to one of claims 1 to 11, characterised in that the base plate (37) has bores (76, 77) for the positioning pins (60) of the housing (9) and clip-in recesses (78) for the clip-in springs (61) of the housing (9), and housing (9) and base plate (37) are connected by means of clip-in connections.

13. Locking key switch according to one of claims 1 to 12, characterised in that the base plate (37) is an injection-moulded screen.

14. Locking key switch according to one of claims 1 to 12, characterised in that the base plate (37) is a conductor plate having conductor paths situated thereon.

15. Locking key switch according to one of claims 1 to 14, characterised in that one base plate (37) is associated with a plurality of locking key switches.

16. Locking key switch according to one of claims 1 to 15, characterised in that a connection plug (79) is provided on the base plate (37) for the electrical connection of the locking key switches (8).

17. Locking key switch according to one of claims 1 to 16, characterised in that contact-maintaining brackets (81) for the insertion of bulbs (82) and devices (83) for the securement of reflectors (84) are integrally mounted on the base plate (37).

18. Locking key switch according to one of claims 1 to 17, characterised in that the base plate (37) is inserted in guides (85) of an interior reading light housing (2), in that the base plate (37) has clip-in projections (86) which co-operate with corresponding shoulder portions (87) on the interior reading light housing (2), in that a web (88) is shaped to fit on the base plate (37), said web engaging in a bore (89) in the interior reading light housing (2), in that bolts (90) are shaped to fit on the base plate (37), said bolts extending into holes (91) of a diaphragm (3), in that clip-in springs (92) are injection-moulded on the interior reading light housing (2), said springs co-operating with lugs (93) on the diaphragm (3), in that recesses (6) are provided in the diaphragm (3) for the push-buttons (7), and in that translucent regions (94) are formed in the diaphragm (3).

19. Locking key switch according to claim 18, characterised in that the translucent regions (94) of the diaphragm (3) include a light window (101) and at least one point emitter (102).

20. Locking key switch according to claim 18 or 19, characterised in that at least one translucent region (94) of the diaphragm (3) is provided with prisms (103) on the side facing the bulb (82).

21. Locking key switch according to claim 19 or 20, characterised in that one light-emitting face (105) of the point emitter (102), remote from the bulb (82) outwardly, forms a convex spherical portion aligned symmetrically relative to an axis (106), and one light-admitting face (107), facing the bulb (82), is inclined obliquely relative to the axis (106).

22. Locking key switch according to claim 21, characterised in that the light-admitting face (107) is partially covered by a lug (108), which is formed from a material impermeable to light, a free edge (109) of the lug (108) facing the axis (106) forming a radius, the transitional edges (110) of which extend towards the diaphragm (3) and lie approximately in the region of a line of symmetry (111) of the point emitter (102), and the arcuate height (112) of the radius of the lug (108) is approximately half the radius of the point emitter (102).

23. Locking key switch according to one of claims 19 to 22, characterised in that the surface (120) of the circumferential region between the small diameter (99) and the large diameter (100) of the point emitter (102) is provided with a light-reflecting layer.

24. Locking key switch according to claim 23, characterised in that the surface (120) provided with the light-reflecting layer is part of an annular reflector (121), which is configured as an individual part.

25. Locking key switch according to claim 24, characterised in that the annular reflector (121) is an extruded plastics material part, the surfaces of which, visible from the diaphragm (3), are highly polished or chrome-plated.

26. Locking key switch according to claim 24 or 25, characterised in that the annular reflector (121) carries receiving pins (123) on its side remote from the diaphragm (3).

27. Locking key switch according to one of claims 19 to 26, characterised in that the point emitters (102) are spattered over sprue channels communicating with pins (125), the translucent material not flowing over the surface (120) of the annular reflector (121).

## Revendications

1. Interrupteur à touche encliquetable, en particulier pour la lampe de lecture intérieure d'un véhicule automobile, comportant
- un boîtier (9) et une plaque de base (37) correspondante,
- un bouton-poussoir (7) soumis à l'action d'un ressort, déplaçable par rapport au boîtier (9),
- un poussoir de commutation (10), déplaçable par le bouton-poussoir (7) et
- un levier de commutation (11), pivotable par le poussoir de commutation (10), avec un pont de contact inséré, soumis à l'action d'un ressort, agissant sur des contacts de fermeture (42) et sur la plaque de base (37),
caractérisé en ce que
- le bouton-poussoir (7) est monté mobile en rotation sur le boîtier (9), le poussoir de commutation (10) est monté mobile en rotation sur le bouton-poussoir (7) et la bascule de commutation (11) est montée mobile en rotation sur le boîtier (9),
- la surface d'actionnement (12) du bouton-poussoir (7) est orientée à angle droit par rapport à l'axe longitudinal (13) du boîtier (9),
- le palier (14) est prévu entre le bouton-poussoir (7) et le boîtier (9), à l'extrémité opposée de l'introduction de la force d'actionnement sur la surface d'actionnement (12) du bouton-poussoir (7), et
- sur la face inférieure (15), opposée à la surface d'actionnement (12), du bouton-poussoir (7), sont formés deux leviers de pivotement (16, 17), s'étendant perpendiculairement à la surface d'actionnement (12), dans lesquels est intégré le palier (18) entre le bouton-poussoir (7) et le poussoir de commutation (10).

2. Interrupteur à touche encliquetable selon la revendication 1, caractérisé en ce que le palier (21) est placé entre le boîtier (9) et la bascule de commutation (11), sur l'axe longitudinal (13) du boîtier (9).

3. Interrupteur à touche encliquetable selon la revendication 1 ou 2, caractérisé en ce que l'assemblage du palier (14) entre le boîtier (9) et le bouton-poussoir (7), du palier (18) entre le bouton-poussoir (7) et le poussoir de commutation (10) et du palier (21) entre le boîtier (9) et la bascule de commutation (11), est obtenu chaque fois par des assemblages clipsés (22, 23, 24).

4. Interrupteur à touche encliquetable selon l'une des revendications 1 à 3, caractérisé en ce qu'au moins l'un des leviers de pivotement (16, 17), se trouvant sur le bouton-poussoir (7), possède un palier à ressort (25), en ce que sur le boîtier (9) est formé un contre-palier à ressort (26) et en ce qu'entre le palier à ressort (25) sur le levier de pivotement (7) et le contre-palier à ressort (26), sur le boîtier (9), est serré un élément à ressort (27).

5. Interrupteur à touche encliquetable selon l'une des revendications 1 à 4, caractérisé en ce que sur au moins l'un des leviers de pivotement (16, 17), se trouvant sur le bouton-poussoir (7), est formé un tenon de butée (30), qui, avec des cames de butée supérieures (31), se trouvant sur le boîtier (9) et des cames de butée inférieures (32), limite la course d'actionnement du bouton-poussoir (7).

6. Interrupteur à touche encliquetable selon l'une des revendications 1 à 5, caractérisé en ce que le poussoir de commutation (10) présente, à ses extrémités, les paliers (18) entre le poussoir de commutation (10) et le bouton-poussoir (7), en ce que sur le poussoir de commutation (10) est formé un doigt de commutation (34), qui à son extrémité possède une forme en V (34) et une coulisse de commutation (35), dans laquelle est pratiqué un évidement (36) en V, le doigt de commutation (33) et la coulisse de commutation (35) étant orientés symétriquement dans le même sens, et les côtés ouverts du V du doigt de commutation (33) et de la coulisse de commutation (34) se faisant face les uns les autres.

7. Interrupteur à touche encliquetable selon l'une des revendications 1 à 6, caractérisé en ce que la bascule de commutation (11) présente à ses extrémités, les paliers (21) entre la bascule de commutation (11) et le boîtier (9) et dans chaque cas symétriquement, en direction d'une plaque de base (37), un pont de contact (38) et un coulisseau d'accrochage (39) soumis à l'action d'un ressort et en direction du poussoir de commutation (10), un ressort de commutation (40) et une surface de commutation (41).

8. Interrupteur à touche encliquetable selon l'une des revendications 1 à 7, caractérisé en ce que le boîtier (9) est formé d'un cadre (52) rectangulaire, sur les petits côtés (53) duquel sont formés des appendices (54) avec des tourillons (55) pour le palier (14) avec le bouton-poussoir (7), et le cadre (52) est fermé, vers la plaque de base (37), partiellement, par un fond (57) présentant une coulisse encliquetable (56), le pont de contact (38) passant à travers l'ouverture de contact (58) restante et des tenons de positionnement (60) ainsi que des ressorts de clipsage (61) étant formés sur la face inférieure (59) du cadre (52) du boîtier (9).

9. Interrupteur à touche encliquetable selon la revendication 8, caractérisé en ce que dans le fond (57) du cadre (52) rectangulaire du boîtier (9) est encastrée une coulisse encliquetable (56), par laquelle peut être atteinte une position de commutation (63) stable au moyen de l'enfoncement (64) et une position de commutation (65) stable au moyen de l'enfoncement (66), le dôme de commutation (67) étant placé entre les enfoncements (64, 66).

10. Interrupteur à touche encliquetable selon la revendication 8, caractérisé en ce que dans le fond (57) du cadre (52) rectangulaire du boîtier (9) est encastrée une coulisse à touche (68), par laquelle une position de commutation de touche (69) peut être atteinte au moyen du chanfrein (70), la position de commutation de touche (69) se replaçant automatiquement dans la position de commutation de départ (71), après relâchement du bouton-poussoir (7), sous l'effet du coulisseau encliquetable (39) soumis à l'action d'un ressort.

11. Interrupteur à touche encliquetable selon l'une des revendications 6 à 10, caractérisé en ce que le doigt de commutation (33) du poussoir de commutation (10) coopère avec la surface de commutation (41) de la bascule de commutation (11) pour faire commuter les positions de commutation (63, 65), en ce que le ressort de commutation (40) de la bascule de commutation (11) pénètre dans la coulisse de commutation (35) du poussoir de commutation (19) et traverse l'ouverture (73), afin d'activer le poussoir de commutation (10), après relâchement du bouton-poussoir (7) pour l'actionnement suivant, en ce que le coulisseau d'accrochage (39) de la bascule de commutation (11), guidé sous l'action d'un ressort dans un perçage (47), fixe, dans la coulisse encliquetable (56) ou coulisse de touche (68) du fond (57) du boîtier (9), les différentes positions de commutation (63 et 65 ou 69), et en ce que sur la bascule de commutation (11) un pont de contact (38) soumis à l'action d'un ressort est maintenu imperdable entre des pattes de guidage (45).

12. Interrupteur à touche encliquetable selon l'une des revendications 1 à 11, caractérisé en ce que la plaque de base (37) présente des perçages (76, 77) pour les tenons de positionnement (60) du boîtier (9) et des évidements de clipsage (78) pour les ressorts de clipsage (61) du boîtier (9) et le boîtier (9) et la plaque de base (37) sont reliés au moyen d'assemblages clipsés.

13. Interrupteur à touche encliquetable selon l'une des revendications 1 à 12, caractérisé en ce que la plaque de base (37) est un grillage estampé enrobé.

14. Interrupteur à touche encliquetable selon l'une des revendications 1 à 12, caractérisé en ce que la plaque de base (37) est une carte de circuits imprimés avec pistes conductrices se trouvant sur celle-ci.

15. Interrupteur à touche encliquetable selon l'une des revendications 1 à 14, caractérisé en ce qu'une plaque de base (37) est affectée à plusieurs interrupteurs à touche encliquetable.

16. Interrupteur à touche encliquetable selon l'une des revendications 1 à 15, caractérisé en ce que sur la plaque de base (37) est prévu un connecteur de branchement (79) pour le raccordement électrique des interrupteurs à touche encliquetable (8).

17. Interrupteur à touche encliquetable selon l'une des revendications 1 à 16, caractérisé en ce que sur la plaque de base (37) sont appliquées d'un seul tenant des équerres de maintien de contact (81) pour l'insertion de lampes à incandescence (82) et de dispositifs (83) pour la fixation de réflecteurs (84).

18. Interrupteur à touche encliquetable selon l'une des revendications 1 à 17, caractérisé en ce que la plaque de base (37) est insérée dans des guidages (85) d'un boîtier de lampe de lecture intérieure (2), en ce que la plaque de base (37) présente des ergots de clipsage (86), qui coopèrent avec des parties en retrait (87) correspondantes sur le boîtier de lampe de lecture intérieure (2), en ce qu'une nervure (88), qui s'engage dans un perçage (89) dans le boîtier de lampe de lecture intérieure (2), est formée sur la plaque de base (37), en ce que sur la plaque de base (37) sont formées des tiges (90), qui pénètrent dans des trous (91) d'un panneau (3), en ce que sur le boîtier de lampe de lecture intérieure (2) sont moulés par injection des ressorts de clipsage (92), qui coopèrent avec des pattes (93) sur le panneau (3), en ce que dans le panneau (3) se trouvent des évidements (6) pour les boutons-poussoirs (7), et en ce que dans le panneau (3) sont encastrées des zones (94) translucides.

19. Interrupteur à touche encliquetable selon la revendication 18, caractérisé en ce que les zones translucides (94) du panneau (3) sont constituées d'une fenêtre de lumière (101) et d'au moins un projecteur ponctuel (102).

20. Interrupteur à touche encliquetable selon la revendication 18 ou 19, caractérisé en ce qu'au moins une zone translucide (94) du panneau (3) est pourvue de prismes (103) sur le côté tourné vers la lampe à incandescence (82).

21. Interrupteur à touche encliquetable selon la revendication 19 ou 20, caractérisé en ce qu'une surface de sortie de lumière (105), tournée à l'opposé de la lampe à incandescence (82), vers l'extérieur, du projecteur ponctuel (102), forme une portion de sphère convexe, orientée symétriquement par rapport à un axe (106), et une surface d'entrée de lumière (107), tournée vers la lampe à incandescence (82), est inclinée obliquement par rapport à l'axe (106).

22. Interrupteur à touche encliquetable selon la revendication 21, caractérisé en ce que la surface d'entrée de lumière (107) est partiellement recouverte par une patte (108) faite d'un matériau ne laissant pas passer la lumière, un bord (109) libre, tourné vers l'axe (106), de la patte (108), formant un rayon dont les bords de transition (110) avec le panneau (3) se situent approximativement dans la zone d'une ligne de symétrie (111) du projecteur ponctuel (102), et la hauteur d'arc (112) du rayon de la patte (108) est approximativement égale à la moitié du rayon du projecteur ponctuel (102).

23. Interrupteur à touche encliquetable selon l'une des revendications 19 à 22, caractérisé en ce que la surface (120) de la zone périphérique entre le petit diamètre (99) et le grand diamètre (100) du projecteur ponctuel (102) est pourvue d'une couche réfléchissant la lumière.

24. Interrupteur à touche encliquetable selon la revendication 23, caractérisé en ce que la surface (120) avec la couche réfléchissant la lumière est une partie d'un réflecteur annulaire (121) conçu en tant que pièce individuelle.

25. Interrupteur à touche encliquetable selon la revendication 24, caractérisé en ce que le réflecteur annulaire (121) est une pièce en matière plastique moulée par injection, dont les surfaces visibles à partir du panneau (3) sont polies brillantes ou chromées.

26. Interrupteur à touche encliquetable selon la revendication 24 ou 25, caractérisé en ce que le réflecteur annulaire (121) porte, sur son côté tourné à l'opposé du panneau (3), des tenons de logement (123).

27. Interrupteur à touche encliquetable selon l'une des revendications 19 à 26, caractérisé en ce que les projecteurs ponctuels (102) sont moulés par injection par des canaux de carotte, le matériau translucide ne coulant pas sur la surface (120) du réflecteur annulaire (121).
